(19) Europäisches Patentamt
European Patent Office
Office européen des brevets

(11) **EP 4 383 369 A2**

(12) **EUROPEAN PATENT APPLICATION**

(43) Date of publication:
**12.06.2024   Bulletin 2024/24**

(51) International Patent Classification (IPC):
**H01M 4/24** (2006.01)      **H01M 4/42** (2006.01)
**H01M 10/36** (2010.01)      **H01M 12/08** (2006.01)
**H01M 4/02** (2006.01)

(21) Application number: **23214606.8**

(22) Date of filing: **06.12.2023**

(52) Cooperative Patent Classification (CPC):
**H01M 10/365; H01M 4/244; H01M 4/42;
H01M 12/085;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **09.12.2022   JP 2022197211**

(71) Applicant: **FDK Corporation
Tokyo 108-8212 (JP)**

(72) Inventors:
• **SUZUKI, Soma
Tokyo, 108-8212 (JP)**

• **MURASE, Satoshi
Tokyo, 108-8212 (JP)**
• **YAMAGUCHI, Tomomichi
Tokyo, 108-8212 (JP)**
• **ITO, Takesh
Tokyo, 108-8212 (JP)**
• **ENDO, Takahiro
Tokyo, 108-8212 (JP)**

(74) Representative: **Epping - Hermann - Fischer
Patentanwaltsgesellschaft mbH
Schloßschmidstraße 5
80639 München (DE)**

(54) **NEGATIVE ELECTRODE FOR ZINC BATTERY AND METHOD FOR MANUFACTURING SAME**

(57)      A negative electrode for a zinc battery is disclosed. The negative electrode comprises: a plate-like negative electrode core member; and a negative electrode mixture layer formed on at least one main surface of the negative electrode core member. The negative electrode mixture layer contains a negative electrode mixture. The negative electrode mixture includes zinc particles formed from at least one of zinc and a zinc alloy. On the at least one main surface of the negative electrode core member, a number of deformed areas in which a change in a length in a thickness direction of the negative electrode core member with respect to a reference exceeds 50 $\mu$m. is 2.4 or less per square millimeter.

## FIG. 3

EP 4 383 369 A2

**Description**

BACKGROUND OF THE INVENTION

Field of the Invention

The present invention relates to a negative electrode for a zinc battery and a method for manufacturing the same.

Description of the Related Art

A zinc battery is a battery for which zinc, a zinc alloy or a zinc-containing compound is used as a negative electrode active material and is a kind of battery that has been researched and developed from long time ago in association with the popularization of batteries. Examples of batteries containing zinc or the like in the negative electrode as primary batteries or secondary batteries (storage batteries) include air-zinc batteries in which oxygen in the air is used for the positive electrode active material, nickel-zinc batteries in which a nickel-containing compound is used for the positive electrode active material, manganese-zinc batteries or zinc-ion batteries in which a manganese-containing compound is used for the positive electrode active material and silver-zinc batteries in which a silver-containing compound is used for the positive electrode active material. Research is underway regarding these zinc batteries. Particularly, air-zinc primary batteries, manganese-zinc primary batteries and silver-zinc primary batteries have been put into practical use and are in wide use across the globe.

In addition, recently, batteries have been used in a variety of devices such as a variety of portable devices and hybrid electric vehicles, and the applications of batteries are expanding. In association with such an expansion of the applications, there is an increasing demand for the development or improvement of batteries in a number of industries. Desires for batteries are mainly improvement in performance, improvement as secondary batteries and, furthermore, development of new batteries. Under such circumstances, there is a desire for additional improvement in the performance of zinc batteries. For example, Japanese Patent No. 3972417 discloses a zinc battery having an improved storage characteristic. One of the performances of zinc batteries requested to be improved is suppression of self-discharge.

In zinc batteries, metallic zinc that is contained in a negative electrode mixture layer causes a local battery reaction with a negative electrode core member and self-decomposes, and thus there has been a problem in that self-discharge proceeds.

SUMMARY OF THE INVENTION

The present invention has been made in consideration of the above-described problem, and an objective of the present invention is to provide a negative electrode for a zinc battery having a suppressed self-discharge and a method for manufacturing the same.

The present invention features a negative electrode for a zinc battery. The negative electrode includes: a plate-like negative electrode core member; and a negative electrode mixture layer formed on at least one main surface of the negative electrode core member. The negative electrode mixture layer contains a negative electrode mixture. The negative electrode mixture includes zinc particles formed from at least one of zinc and a zinc alloy. On the at least one main surface of the negative electrode core member, a number of deformed areas in which a change in a length in a thickness direction of the negative electrode core member with respect to a reference exceeds 50 $\mu$m is 2.4 or less per square millimeter.

According to the present invention, self-discharge of zinc batteries manufactured using the negative electrode for a zinc battery is suppressed.

BRIEF DESCRIPTION OF THE DRAWINGS

FIG. 1 is a conceptual diagram showing a zinc battery according to one embodiment;
FIG. 2 is a flowchart showing the manufacturing of a negative electrode plate for a zinc battery; and
FIG. 3 is a cross-sectional view showing a negative electrode plate.

DETAILED DESCRIPTION OF THE INVENTION

Hereinafter, embodiments according to the present disclosure will be described referring to drawings. The following description is to show specific examples of the content of the present disclosure and can be varied and modified by a person skilled in the art in a variety of manners within the scope of a technical concept to be disclosed.

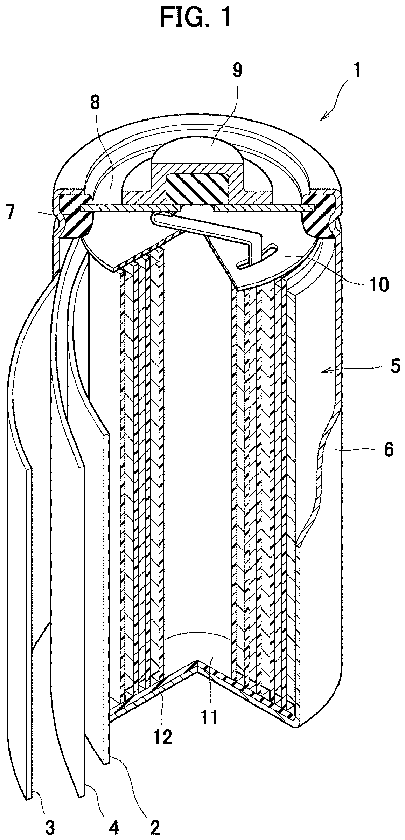

As shown in FIG. 1, a battery 1 according to one embodiment is a FA-sized nickel-zinc battery. The battery 1 has an electrode group 5 accommodated in a bottomed cylindrical outer can 6. In addition, the outer can 6 accommodates an alkaline electrolytic solution in which zinc oxide has been saturated and dissolved.

The electrode group 5 includes a positive electrode plate 2 and a negative electrode plate 3 wound in a tubular shape with a separator 4 being intervened therebetween. The opening of the outer can 6 is sealed with a conductive sealing member 8 with an insulating gasket 7 being intervened therebetween. The sealing member 8 has a positive electrode terminal 9 on the outer surface. The positive electrode plate 2 is electrically connected to the positive electrode terminal 9 through a positive electrode current collector 10. The outermost circumferential surface of the electrode group 5 is surrounded by the negative electrode plate 3. The outermost circumferential surface is in contact with the inner circumferential surface of the outer can 6. Furthermore, the negative electrode plate 3 is positioned on the bottom side of the electrode group 5 and in contact with the bottom portion of the outer can 6 by means of a negative electrode current collector 11. Therefore, the outer can 6 is electrically connected to a negative electrode terminal 12.

The positive electrode plate 2 includes a belt-like conductive positive electrode core member and a positive electrode mixture that is held in holes of the positive electrode core member. The positive electrode core member has a porous structure. The positive electrode mixture is filled in the holes of the positive electrode core member. The positive electrode core member is formed of a nickel-plated net-like, sponge-like or fibrous metal plate or foam nickel.

The positive electrode mixture contains positive electrode active material particles and a thickener. The positive electrode active material particles are composed of a nickel hydroxide powder, a cobalt hydroxide powder, an yttrium oxide powder, a zinc oxide powder or a niobium oxide powder. These positive electrode active material particles, the thickener, and water are mixed together to make a positive electrode active material slurry. The positive electrode active material slurry is filled into the positive electrode core member, the slurry is dried, and then the positive electrode core member is rolled and cut into a predetermined size of the positive electrode plate.

The negative electrode plate 3 includes a belt-like conductive negative electrode core member 13 and negative electrode mixture layers 14 formed on both surfaces of the negative electrode core member 13. The negative electrode core member 13 is made of a metal plate having surfaces plated with tin. Regarding the material, the metal plate can be produced from copper or a copper alloy such as brass or bronze. Alternatively, regarding the material, the metal plate can be produced from iron or an iron alloy such as stainless steel. Regarding the shape, the metal plate is preferably a perforated metal sheet having through-holes or an imperforated foil having no through-holes. In the present embodiment, the negative electrode core member 13 is a copper perforated metal sheet in which through-holes are regularly formed in the thickness direction.

The negative electrode mixture layer 14 contains a negative electrode mixture. The negative electrode mixture contains zinc oxide and metallic zinc as negative electrode active materials, a bismuth oxide powder, indium oxide, potassium oxalate, hydroxypropyl cellulose and styrene-butadiene rubber. Table 1 indicates the composition proportion of each material in the negative electrode mixture.

[Table 1]

| Material name | Content (unit: parts by mass) |
|---|---|
| Zinc oxide | 100 |
| Metallic zinc | 25 |
| Bismuth oxide | 3 |
| Indium oxide | 0.1 |
| Potassium oxalate | 2 |
| Hydroxypropyl cellulose | 1 |
| Styrene-butadiene rubber | 4 |

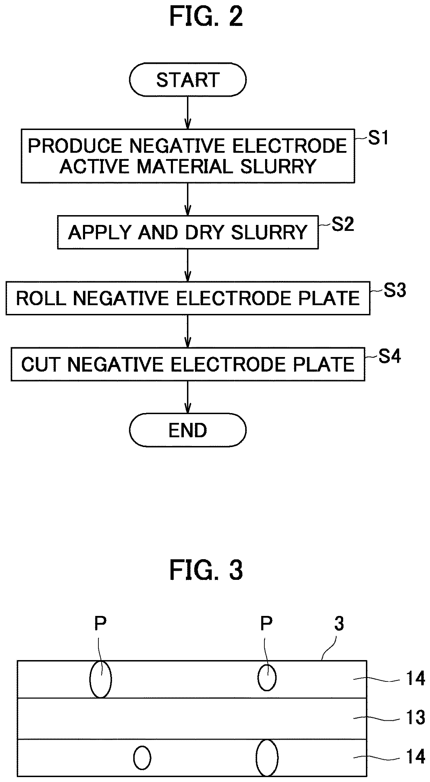

A method for producing the negative electrode plate 3 is shown in FIG. 2. Materials shown in Table 1 are mixed with water to produce a negative electrode active material slurry (Step S1). In order to produce the negative electrode active material slurry, zinc oxide and metallic zinc are processed into a particle shape as metal particles P. The slurry is uniformly applied to and dried on the negative electrode core member 13 (Step S2). After that, the negative electrode core member 13 is rolled with a rolling roll to increase the density of the negative electrode active material in the negative electrode core member 13 (Step S3). After that, the negative electrode core member 13 is cut into a predetermined size (Step S4). The negative electrode mixture is filled into the through-holes of the negative electrode core member 13 by means of the rolling. Consequently, the negative electrode mixture layers 14 that each extend in the in-plane direction of the negative electrode core member 13 are formed on both surfaces of the negative electrode core member 13. In addition, the negative electrode mixture layer 14 has a thickness in the thickness direction of the negative electrode core member 13. The thickness of the negative electrode mixture layer 14 is indicated by (T) in the thickness direction of the negative electrode core member 13.

The particle diameters (D90) of zinc oxide and metallic zinc are formed so that (D90/T) based on the thickness T of the negative electrode mixture layer 14 is 1.9 or less. In the present embodiment, "D90", particle size distribution D90, is defined as "a diameter at which 90% of the population of zinc particles in a volume cumulative distribution are below this particle diameter." FIG. 3 is a schematic view showing the relationship between the thickness T of the negative electrode mixture layer 14 and the particle diameter D90. In the present embodiment, the ratio of the particle diameter D90 to the thickness T of the negative electrode core member 13 is indicated by (D90/T).

A zinc battery was produced using a zinc powder in which D90 of metal particles composed of metallic zinc was 136 $\mu$m so that (D90/T) reached 1.9. This zinc battery is set as Example 1.

On the other hand, a zinc battery was produced using a zinc powder in which D90 of metal particles composed of metallic zinc was 198 $\mu$m so that (D90/T) reached 2.8. This zinc battery is set as Comparative Example 1.

That is, in Example 1, D90 of the zinc particles constituting the negative electrode mixture layer 14 is relatively large, compared with the thickness of the negative electrode mixture layer 14. On the other hand, in Comparative Example 1, D90 of the zinc particles constituting the negative electrode mixture layer is relatively small, compared with the thickness of the negative electrode mixture layer.

For each of the zinc batteries of Example 1 and Comparative Example 1, the thickness of the negative electrode core member 13 before the application of the negative electrode active material slurry was measured using a micro gauge. Further, the thickness of the rolled negative electrode plate 3 was measured using a micro gauge. In both Example 1 and Comparative Example 1, the thickness of the negative electrode core member 13 was 60 $\mu$m, and the thickness of the negative electrode plate 3 was 200 $\mu$m. The negative electrode mixture layers 14 are formed on both surfaces of the negative electrode core member 13. The thickness T of the negative electrode mixture layer 14 formed on one surface of the negative electrode core member 13 is 70 $\mu$m.

The same negative electrode plate as the negative electrode plates 3 assembled into the zinc batteries of Example 1 and Comparative Example 1 was immersed in a 30 wt% KOH aqueous solution for eight hours, and the negative electrode mixture layers 14 were removed from the negative electrode core member 13. The surface of the negative electrode core member from which the negative electrode mixture layers 14 had been removed was observed using a confocal laser microscope, and the arithmetic average height Sa of the negative electrode core member and the number N per square millimeter of deformed areas having a depth of 50 $\mu$m or more were measured. The arithmetic average height Sa is the average value of differences in elevation from the average surface of the surface and is a parameter regulated by the International Organization for Standardization ISO 25178 regarding 3D surface texture characterization by the International Organization for Standardization (ISO).

In the present embodiment, the reference surface used to calculate the arithmetic average height Sa is a surface obtained by removing all through-holes from entire one surface of the wide surfaces facing each other in the thickness direction of the negative electrode core member 13 on which the negative electrode mixture layer 14 is formed. That is, the reference surface for the arithmetic average height Sa corresponds to one surface of the negative electrode core member which forms an interface with the negative electrode mixture layer.

Furthermore, in the present embodiment, the "deformed area" of the negative electrode core member 13 means the unevenness of the one surface of the negative electrode core member 13 which is exposed by removing the negative electrode mixture layer 14 in the manufactured battery 1. Further, the unevenness of the one surface of the negative electrode core member 13 is measured with respect to the flat surface of the negative electrode core member 13 prior to the application of the negative electrode active material slurry. This flat surface of the negative electrode core member 13 prior to the application of the negative electrode active material slurry is used as the reference to determine whether the unevenness of the one surface is the deformed area or not. That is, the "deformed area" is the region in which the thickness of the negative electrode core member 13 is uneven. Particularly, in the present disclosure, the deformed area means the area including a site where a change in the length (depth) in the thickness direction is 50 $\mu$m or more and a peripheral area thereof. In addition, the above-described site and the peripheral area thereof is set as one unit for the deformed area. The number of deformed regions is then counted on a unit basis. The deformed area composed of the site having a depth of 50 $\mu$m or more and the peripheral area thereof is an example of the "deformed area."

The configuration of the surfaces of the negative electrode core members after the removal of the negative electrode mixture layers will be described. Table 2 indicates the arithmetic average heights Sa and the numbers N per square millimeter of the deformed areas having a depth of 50 $\mu$m or more of the negative electrode core members.

[Table 2]

|  | Example 1 | Comparative Example 1 |
|---|---|---|
| Negative electrode plate thickness (μm) | 200 | 200 |
| Negative electrode core member thickness (μm) | 60 | 60 |
| Negative electrode mixture layer thickness T(μm) | 70 | 70 |
| D90 of zinc particles (μm) | 136 | 198 |
| D90/T | 1.9 | 2.8 |
| Arithmetic average height of negative electrode core member with mixture layer being removed Sa (μm) | 7.4 | 9.9 |
| Number of deformed areas having depth of 50 um or more in surface of negative electrode core member with mixture layer being removed N (per square millimeter) | 2.4 | 5.3 |

As shown in Table 2, in Example 1, the arithmetic average height Sa of the negative electrode core member is 7.4 μm, which is smaller than 9.9 μm in Comparative Example 1. In addition, in Example 1, the number N per square millimeter of the deformed areas having a depth of 50 μm or more is 1.9, which is smaller than 2.8 in Comparative Example 1. Therefore, the interfacial surface of the negative electrode core member in contact with the negative electrode mixture layer is flat in Example 1, compared with Comparative Example 1. And the influence of the metal particle diameter D90 included in the negative electrode mixture is small.

Furthermore, the self-discharge characteristics of the two zinc batteries were evaluated. A self-discharge experiment for evaluating the self-discharge characteristic is divided into a capacity confirmation stage and a self-discharge stage.

In the capacity confirmation stage, the zinc battery is charged at constant current/constant voltage (CCCV) under conditions of an upper limit current of 0.5 C, an upper limit voltage of 1.9 V, and a lower limit current of 0.1 C to be fully charged. After the charging is finished, the battery is left idle for 15 minutes, then, constant current (CC) discharging is performed at 0.5 C to a lower limit voltage of 1.3 V, and then the discharge capacity C is measured.

In the self-discharge stage, after the above capacity confirmation stage, the zinc battery is again charged at constant current/constant voltage (CCCV) under the same conditions, that is, the conditions of an upper limit current of 0.5 C, an upper limit voltage of 1.9 V, and a lower limit current of 0.1 C. And then the zinc battery is left to stand at an ambient temperature of 35°C for a predetermined time period.

After the battery is left to stand for a predetermined time period shown in Table 3, the battery is moved to a room temperature environment and CC-discharged at 0.5 C to a lower limit voltage of 1.3 V, and then the discharge capacity C' is measured.

The residual rates R are calculated from the measured discharge capacities C and C' as shown below and are shown in Table 3 together with durations where the zinc battery is left to stand from the end of the charging.

$$R = C'/C$$

[Table 3]

|  | Residual rate (%) | |
|---|---|---|
| Duration | Example 1 | Comparative Example 1 |
| One week | 88 | 85.8 |
| Two weeks | 79.6 | 77.3 |
| One month | 71.3 | 67.4 |
| Two months | 51.8 | 47.0 |

As shown in Table 3, the residual rate R of the zinc battery of Example 1 decreased to 88% when one week elapsed, 79.6% when two weeks elapsed, 71.3% when one month elapsed and 51.8% when two months elapsed. In contrast, the residual rate of the zinc battery of Comparative Example 1 decreased to 85.8% when one week elapsed, 77.3% when two weeks elapsed, 67.4% when one month elapsed and 47.0% when two months elapsed. It is found that the residual rate R of the battery of Example 1 is higher than the residual rate R of the battery of Comparative Example 1 regardless of the elapsed periods. That is, it is found that self-discharge is suppressed in the battery of Example 1, compared with the battery of Comparative Example 1.

Generally, in zinc batteries, as the particle diameters of zinc particles in the negative electrode mixture layer decrease, the combined surface area of all of the zinc particles in the negative electrode mixture layer increases. The increase in the surface area of the zinc particles leads to the self-discharge of batteries as previously confirmed, and decreases the residual rate of the capacity.

In consideration of the above-described fact, in the zinc battery according to the present embodiment, when the ratio of the particle diameter D90 of the zinc particles in the negative electrode mixture layer to the thickness T of the negative electrode mixture layer is decreased, that is, when the D90/T value is set smaller than 1.9, the particle diameter D90 of the zinc particles becomes small, which leads to an increase in the combined surface area of all of the zinc particles to the thickness T of the negative electrode mixture layer. However, when the particle diameter D90 is set too small, the self-discharge of the battery increases as previously confirmed, and the residual rate of the capacity is decreased.

On the other hand, when the D90/T value is set larger than 1.9, the particle diameter D90 of the zinc particles with respect to the thickness T of the negative electrode mixture layer becomes large. When the particle diameter D90 is large, there are cases where the metal particles are forced to bite into the negative electrode core member due to rolling during the manufacturing of the negative electrode plate, to damage the tin plate on the surface of the negative electrode core member. The negative electrode core member is tinned to enhance the effect of suppressing the self-discharge of the zinc battery. Therefore, the damage to the tinned negative electrode core member probably leads to an increase in self-discharge.

Therefore, it is preferable that the D90 of the metallic zinc particles to the thickness of the negative electrode mixture layer, that is, (D90/T) is set to 1.9 or less. This is because the tinned surface of the negative electrode core member is not damaged if the D90 value is 1.9. This configuration improves the residual rate of the battery capacity of the zinc battery and suppresses self-discharge.

In addition, in the present disclosure, the damage of the surface of the negative electrode core member is observed as unevenness generated on the surface, which is one surface of the negative electrode core member 13. That is, the damage is equivalent to the deformed area. Therefore, the number of deformed areas per unit area indicates the degree of damage in the tinned surface of the negative electrode core member. Accordingly, when the electrode group 5 is removed from the manufactured battery 1, and the negative electrode mixture layers 14 are then removed from the negative electrode plate 3 to count the number of deformed areas in the surface of the negative electrode core member 13, it is also possible to estimate the degree of self-discharge of the battery 1.

**Claims**

1. A negative electrode for a zinc battery, comprising:

   a plate-like negative electrode core member; and
   a negative electrode mixture layer formed on at least one main surface of the negative electrode core member, **characterized in that** the negative electrode mixture layer contains a negative electrode mixture,
   the negative electrode mixture includes zinc particles formed from at least one of zinc and a zinc alloy, and
   on the at least one main surface of the negative electrode core member, a number of deformed areas in which a change in a length in a thickness direction of the negative electrode core member with respect to a reference exceeds 50 $\mu$m is 2.4 or less per square millimeter.

2. The negative electrode for a zinc battery according to claim 1, **characterized in that** an arithmetic average height on the at least one main surface of the negative electrode core member is 7.4 $\mu$m or less.

3. The negative electrode for a zinc battery according to one of claims 1 or 2, **characterized in that** the negative electrode mixture layer formed on the at least one main surface of the negative electrode core member has a thickness (referred to as T) in the thickness direction of the negative electrode core member, and
   a ratio of a particle size distribution D90 (referred to as D90) of the zinc particles to the thickness T, that is, "D90/T" is 1.9 or less.

4. A method for manufacturing a negative electrode for a zinc battery, comprising:

forming a negative electrode mixture layer on at least one main surface of a plate-like negative electrode core member with a negative electrode mixture containing zinc particles formed from at least one of zinc and a zinc alloy,

wherein a ratio of a particle size distribution D90 (referred to as D90) of the zinc particles contained in the negative electrode mixture to a thickness (referred to as T) of the negative electrode mixture layer formed by the forming in a thickness direction of the negative electrode core member, that is, "D90/T" is 1.9 or less, and wherein on the at least one main surface of the negative electrode core member, a number of deformed areas in which a change in a length in the thickness direction with respect to a reference exceeds 50 $\mu$m is 2.4 or less per square millimeter.

# FIG. 1

# FIG. 2

```
        ┌─────────────┐
        │    START    │
        └─────────────┘
               │
               ▼
┌──────────────────────────────────┐
│  PRODUCE NEGATIVE ELECTRODE      │──S1
│     ACTIVE MATERIAL SLURRY       │
└──────────────────────────────────┘
               │
               ▼
     ┌───────────────────────┐
     │  APPLY AND DRY SLURRY  │──S2
     └───────────────────────┘
               │
               ▼
┌──────────────────────────────────┐
│  ROLL NEGATIVE ELECTRODE PLATE   │──S3
└──────────────────────────────────┘
               │
               ▼
┌──────────────────────────────────┐
│  CUT NEGATIVE ELECTRODE PLATE    │──S4
└──────────────────────────────────┘
               │
               ▼
        ┌─────────────┐
        │     END     │
        └─────────────┘
```

# FIG. 3

**REFERENCES CITED IN THE DESCRIPTION**

**Patent documents cited in the description**

• JP 3972417 B